# FASCICULE DE BREVET EUROPEEN

(11) **EP 1 307 856 B1**
(45) Date de publication et mention de la délivrance du brevet: **24.03.2004**
(21) Numéro de dépôt: 01958180.0
(22) Date de dépôt: 25.07.2001
(51) Int. Cl.: G06K 17/00, G06F 17/30

(54) **INSTALLATION DE MISE A DISPOSITION D'INFORMATIONS RELATIVES A UN OBJET**
EINRICHTUNG ZUR BEREITSTELLUNG VON INFORMATIONEN ÜBER OBJEKTE
INSTALLATION PROVIDING DATA CONCERNING AN OBJECT

(30) Priorité: 27.07.2000 FR 0009876
(43) Date de publication de la demande: 07.05.2003
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: BRUGEROLLE, Jean-Renaud, F-75016 Paris (FR); FERENCZI, Laurent, F-95620 Parmain (FR)
(74) Mandataire: Conan, Philippe Claude
(86) Numéro de dépôt international: PCT/FR2001/002437
(87) Numéro de publication internationale: WO 2002/011059

(56) Documents cités:
- WO-A-98/40823
- WO-A-98/57474
- AU-A- 720 554
- GB-A- 2 328 304
- US-A- 5 971 277

## Description

La présente invention concerne une installation de mise à disposition d'informations relatives à un objet, l'installation comportant une étiquette électronique fixée sur cet objet et cette étiquette électronique comprenant des moyens de stockage d'informations, l'installation comportant également des moyens de lecture d'au moins une partie des informations stockées dans l'étiquette électronique et des moyens d'accès à au moins une base de données contenant des informations complémentaires relatives à cet objet, ladite base de données étant associée à une adresse, et des informations de localisation de la base de données étant stockées dans l'étiquette électronique. Une telle installation est connue de US-A-5 971 277 et de AU-A-720 554.

Généralement, lorsqu'elle est appliquée au traçage d'emballages de gaz rattachés à un site industriel, une telle installation comprend une étiquette électronique fixée sur un emballage et comportant, en mémoire, une certaine quantité d'informations sur l'emballage ainsi que des données d'identification de celui-ci.

Sur le site de rattachement de l'emballage, l'installation associe également à cette étiquette électronique une base de données comportant des informations complémentaires sur l'emballage et permet à un utilisateur d'y accéder après reconnaissance des données d'identification.

Lorsque cette installation s'applique à une multitude d'emballages rattachés à une multitude de sites, chacun de ces sites comportant une base de données, une étiquette donnée n'est reconnue que par la base de données propre au site auquel est rattaché l'emballage correspondant.

Ainsi, si lors de déplacements, un emballage change de site, la base de données du nouveau site où se trouve l'emballage ne reconnaîtra pas les données d'identification.

L'invention vise à remédier aux inconvénients d'une installation classique, en créant une installation capable de mettre à disposition d'un utilisateur, des informations complémentaires relatives à un emballage de gaz qui ne sont pas stockées sur l'étiquette électronique de cet emballage, et ce quel que soit le site où l'emballage se trouve.

L'invention a donc pour objet une installation de mise à disposition d'informations relatives à un objet, l'installation comportant une étiquette électronique fixée sur cet objet et cette étiquette électronique comprenant des moyens de stockage d'informations, l'installation comportant également des moyens de lecture d'au moins une partie des informations stockées dans l'étiquette électronique et des moyens d'accès à au moins une base de données contenant des informations complémentaires relatives à cet objet, ladite base de données étant associée à une adresse, et des informations de Iocalisation de la base de données étant stockées dans l'étiquette électronique, caractérisée en ce que des données d'identification de l'objet associées aux informations de localisation sont stockées dans l'étiquette électronique, et en ce que les moyens d'accès sont adaptés pour l'accès à la base de données en fonction des informations de localisation et des données d'identification, lues par les moyens de lecture.

Ainsi, une installation selon l'invention permet d'accéder aux informations complémentaires relatives à un emballage de gaz, quel que soit le site sur lequel il se trouve, en stockant dans l'étiquette électronique de l'emballage, les données permettant d'accéder à l'endroit où les informations complémentaires sont stockées.

L'installation de mise à disposition d'informations selon l'invention peut en outre comporter une ou plusieurs des caractéristiques suivantes :
- au moins une partie des informations de localisation comporte l'adresse associée à la base de données correspondante ;
- les moyens d'accès sont adaptés pour l'accès à la base de données à travers un réseau de transmission d'informations;
- le réseau de transmission d'informations comporte au moins l'un des éléments parmi un réseau de type Intranet, un réseau de type Extranet, un réseau de type Internet, un réseau de téléphonie commuté et un réseau de télécommunication sans fil ;
- les moyens d'accès à la base de données comportent un dispositif de télécommunication sans fil et les moyens de lecture comportent une interface d'échange d'informations avec le dispositif de télécommunication sans fil ;
- les moyens de lecture sont intégrés dans le dispositif de télécommunication sans fil :
   - le dispositif de télécommunication sans fil comporte des moyens de transmission automatique de données de localisation de l'objet vers la base de données ;
   - l'installation comporte des moyens de repérage automatique des informations de localisation dans les moyens de stockage par les moyens de lecture ;
   - les moyens de stockage comportent des moyens de limitation de l'accès par les moyens de lecture aux informations de localisation de la base de données ;
   - les moyens de lecture comportent des moyens de mise à jour automatique des informations de localisation stockées dans les moyens de stockage, en cas de changement de l'adresse associée à la base de données ; et
   - l'installation comporte en outre au moins une base de données intermédiaire contenant des informations de localisation d'une multiplicité de bases de données contenant chacune des informations complémentaires relatives audit objet, la base de données intermédiaire est associée à une adresse, et au moins une partie des informations de localisation stockées dans l'étiquette électronique comporte l'adresse de la base de données intermédiaire.

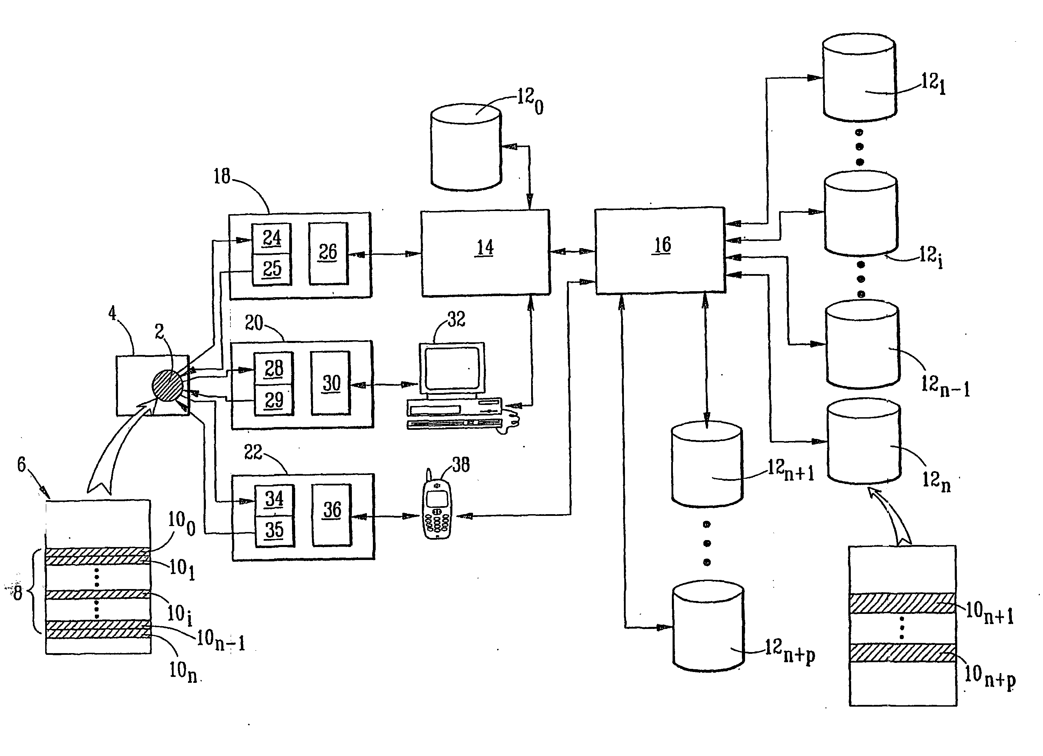

L'invention sera mieux comprise à l'aide de la description qui va suivre, donnée uniquement à titre d'exemple et faite en se référant au dessin annexé dont la figure unique est une vue schématique de la structure générale d'une installation de mise à disposition d'informations.

L'installation représentée comporte une étiquette électronique 2 de type classique fixée sur un objet 4, tel qu'un emballage réutilisable d'un gaz industriel.

Cette étiquette 2 comporte des moyens réinscriptibles 6 de stockage d'informations sur l'emballage 4. Ces moyens de stockage 6 comportent, comme connu en soi, d'une part une zone d'accès libre, où les informations mémorisées peuvent être lues sans nécessiter de mot de passe et d'autre par une zone d'accès protégée en lecture où un mot de passe est nécessaire pour accéder aux informations mémorisées. Des données d'identification de l'emballage 4 sont stockées dans les moyens de stockage 6. De plus, un champ spécifique 8, dont la position est prédéterminée dans les moyens de stockage 6, stocke des informations constituées des adresses 10₀, 10₁, ..., 10ᵢ, ..., 10ₙ de base de données respectives 12₀, 12₁, ..., 12ᵢ, ..., 12ₙ.

Par adresse d'une base de données, on entend une adresse IP (Internet Protocol).

L'adresse IP est une dénomination unique qui permet de localiser une ressource ou un document sur le réseau Internet. L'adresse IP n'indique que la méthode pour y accéder et le nom du serveur.

Les bases de données 12₀ à 12ₙ₋₁, contiennent des informations complémentaires sur l'emballage 4 telles que son lieu de fabrication, son historique, et son programme d'entretien. La base de données 12ₙ, quant à elle, est une base de données intermédiaire stockant les adresses 10ₙ₊₁, ..., 10ₙ₊ₚ, d'une multiplicité de bases de données respectives 12ₙ₊₁, ..., 12ₙ₊ₚ, contenant chacune des informations complémentaires sur l'emballage 4.

L'utilisation d'une base de données intermédiaire permet de structurer l'accès aux informations complémentaires relatives à l'emballage 4 en regroupant un certain nombre d'entre elles, lorsqu'elles concernent un même thème, par exemple.

La base de données 12₀ est une base de données locale, située sur le site auquel est rattaché l'emballage 4. Elle est connectée à un réseau local 14 de transmission d'informations, de type Intranet. Le réseau local 14 est lui-même connecté à un réseau externe 16 de transmission d'informations, tel que le réseau Internet.

Au réseau Internet 16 sont également connectées de façon classique soit directement, soit indirectement, les bases de données distantes 12₁ à 12ₙ₊ₚ.

Par exemple, chacune des bases de données 12₁ à 12ₙ₋₁ est située sur un site industriel, analogue à celui sur lequel est située la base de données 12₀, auquel l'emballage a été rattaché pendant un certain temps, lors de ses déplacements successifs. Chaque base de données comporte alors des informations relatives à l'emballage 4, inscrites lors de son rattachement temporaire au site sur lequel elle est située.

Le dispositif comporte également pour chaque site auquel sont rattachés des emballages 4, différents moyens de lecture 18, 20 et 22. Ces moyens de lecture sont adaptés pour la lecture des informations stockées dans les moyens de stockage 6 de l'étiquette électronique 2. Ils sont également adaptés pour un accès en écriture dans les moyens de stockage 6 pour des mises à jour automatiques de ces informations.

En effet, les premiers moyens de lecture 18 comportent un lecteur 24 d'étiquettes électroniques de type classique, adapté pour l'acquisition des informations relatives aux adresses 10₀, 10₁, ..., 10ₙ et des moyens de mise à jour 25 automatique de ces informations dans les étiquettes électroniques. Ces premiers moyens de lecture comportent également une interface 26 d'accès aux bases de données 12₀ à 12ₙ₊ₚ, connectée au réseau local 14 et permettant ainsi soit localement, soit à distance, via le réseau Internet 16, d'accéder aux informations complémentaires relatives à l'emballage 4 stockées dans les bases de données 12₀ à 12ₙ₋₁ et 12ₙ₊₁ à 12ₙ₊ₚ, puis de les visualiser sur un écran (non représenté).

Les deuxièmes moyens de lecture 20 comportent de même un lecteur 28 d'étiquettes électroniques, identique au lecteur 24 et des moyens 29 de mise à jour automatique, identiques aux moyens de mise à jour 25. Ces deuxièmes moyens de lecture comportent également une interface 30 d'échange d'informations avec un micro-ordinateur 32 relié au réseau local 14. Le micro-ordinateur 32 est muni d'un logiciel de navigation sur le réseau Internet 16 et sur l'intranet 14 de type classique, lui permettant d'accéder aux bases de données 12ₒ à 12ₙ₊ₚ.

Enfin, les troisièmes moyens de lecture 22 comportent également un lecteur 34 d'étiquettes électroniques, identique au lecteur 24 et des moyens de mise à jour 35 automatique identiques aux moyens de mise à jour 25. Ces troisièmes moyens de lecture comportent également une interface 36 d'échange d'informations avec un téléphone mobile 38, ce dernier étant adapté pour l'accès aux bases de données 12₀ à 12ₙ₊ₚ via le réseau Internet 16, selon le standard WAP, connu de l'état de la technique.

Comme connu en soi, le téléphone mobile comporte des moyens de transmission au réseau Internet 16 de données de localisation, classiquement de type GPS ou GSM. Ces données sont transmises par exemple à destination d'au moins une des bases de données 12₀ à 12ₙ₊ₚ, en tant que données de localisation de l'emballage 4.

Le fonctionnement de l'installation, dont la structure a été précédemment décrite, va maintenant être détaillé.

Un utilisateur souhaitant tracer ou obtenir des informations sur l'emballage de gaz 4 se munit de l'un des moyens de lecture 18, 20 ou 22 et place le lecteur 24, 28 ou respectivement 34 à proximité de l'étiquette électronique 2. Toutes les informations contenues dans les moyens de stockage 6, contenant notamment les données d'identification de l'emballage, sont alors transmises aux moyens de lecture 18, 20 ou 22, soit directement si ces informations sont stockées dans une zone d'accès libre des moyens de stockage 6, soit indirectement, c'est-à-dire après validation d'un identifiant et d'un mot de passe, si ces données sont stockées dans une zone protégée en lecture des moyens de stockage 6.

Parmi ces informations, celles concernant des adresses 10₀ à 10ₙ sont automatiquement localisables par les moyens de lecture 18, 20 ou 22, ceux-ci comportant les données de position prédéterminée du champ spécifique 8 dans les moyens de stockage 6. Ces adresses sont alors utilisées par les moyens d'accès 26, 32 ou 38 aux bases de données pour accéder aux pages d'informations correspondantes, à travers le réseau local 14 et éventuellement à travers le réseau Internet 16.

Les moyens d'accès 26, 32 ou 38 utilisent les données d'identification associées aux adresses IP pour accéder respectivement aux pages d'informations correspondant à l'emballage 4.

Si, après avoir transmis une requête au réseau de transmission d'informations, les moyens d'accès 26, 32 ou 38 sont informés du changement d'adresse de l'une des bases de données 12₀ à 12ₙ, cette nouvelle adresse leur est transmise. Ils peuvent alors à leur tour la transmettre aux moyens de mise à jour 25, 29 ou 35 automatique afin de modifier l'adresse correspondante, stockée dans l'étiquette électronique 2.

Les moyens d'accès affichent ensuite de façon classique les pages de présentation correspondant aux adresses IP requises associées aux données d'identification. Ces pages de présentation sont par exemple affichées selon le format classique HTML sur l'écran du micro-ordinateur 32 ou selon le format classique WML du standard WAP sur l'écran du téléphone mobile 38.

S'il s'agit des pages de présentation contenues dans les bases de données 12₀ à 12ₙ₋₁, celles-ci contiennent des informations complémentaires sur l'emballage 4. Si, par contre, il s'agit de la page de présentation de la base de données intermédiaire 12ₙ, celle-ci contient les adresses 10ₙ₊₁ à 10ₙ₊ₚ des bases de données d'informations complémentaires 12ₙ₊₁ à 12ₙ₊ₚ. De façon classique, on accède aux bases de données 12ₙ₊₁ à 12ₙ₊ₚ en sélectionnant les adresses correspondantes sur la page de présentation de la base de données 12ₙ.

Il apparaît clairement qu'une installation selon l'invention permet la mise à disposition d'une quantité importante d'informations relatives à un objet 4, tel qu'un emballage de gaz destiné à se déplacer sur plusieurs sites industriels, grâce à la présence sur l'emballage d'une étiquette électronique 2 comportant des informations relatives aux adresses 10₀, ..., 10ₙ de bases de données comportant des informations complémentaires. En effet, il suffit alors de se munir de moyens de lecture 18, 20 ou 22 d'étiquettes électroniques et de moyens d'accès 26, 32 ou 38 à ces bases de données, pour obtenir un ensemble complet d'informations sur l'emballage.

Il apparaît également qu'une installation selon l'invention facilite le traçage de l'emballage 4. Par exemple; dans une application où l'étiquette électronique 2 comporte une seule adresse 10₀, c'est-à-dire celle de la base de données 12₀ située sur le site de rattachement de l'emballage 4, elle permet immédiatement de connaître le site d'origine de l'emballage si celui-ci est déplacé sur un nouveau site. On peut alors soit renvoyer l'emballage vers son site d'origine, soit transférer les informations complémentaires de façon classique depuis la base de données 12₀ vers la base de données de son nouveau site de rattachement.

On notera également que l'invention n'est pas limitée au mode de réalisation décrit.

Ainsi, en variante, les troisièmes moyens de lecture 22 sont intégrés dans le téléphone mobile 38, c'est-à-dire qu'ils sont disposés dans le même boîtier que le téléphone mobile.

En variante également, au lieu d'être constitués d'un champ 8 dont la position est prédéterminée dans les moyens de stockage 6, les moyens de repérage automatique sont constitués d'un code prédéterminé stocké dans les moyens de stockage 6 et connu des moyens de lecture 18, 20 ou 22, indiquant que les informations suivant ce code sont relatives à des adresses.

Enfin, en variante, le réseau externe 16 de transmission d'informations comporte un Extranet, un réseau de téléphonie commuté ou un réseau de télécommunication sans fil.

## Revendications

1. Installation de mise à disposition d'informations relatives à un objet (4), l'installation comportant une étiquette électronique (2) fixée sur cet objet (4) et cette étiquette électronique comprenant des moyens de stockage (6) d'informations, l'installation comportant également des moyens de lecture (18, 20, 22) d'au moins une partie des informations stockées dans l'étiquétte électronique (2) et des moyens d'accès (26, 32, 38) à au moins une base de données (12₀, ..., 12ₙ₋, 12ₙ₊₁, ..., 12ₙ₊ₚ) contenant des informations complémentaires relatives à cet objet, ladite base de données (12₀, ..., 12ₙ₋₁, 12ₙ₊₁, ..., 12ₙ₊ₚ) étant associée à une adresse, et des informations de localisation (10₀, ..., 10ₙ) de la base de données étant stockées dans l'étiquette électronique (2), **caractérisée en ce que** des données d'identification de l'objet (4), associées aux informations de localisation (10₀, ..., 10ₙ) sont stockées dans l'étiquette électronique (2), et **en ce que** les moyens d'accès (26, 32, 38) sont adaptés pour l'accès à la base de données en fonction des informations de localisation (10₀, ..., 10ₙ) et des données d'identification, lues par les moyens de lecture (18,20,22).

2. Installation de mise à disposition d'informations selon la revendication 1, **caractérisée en ce qu'**au moins une partie des informations de localisation (10₀, ..., 10ₙ₋₁) comporte l'adresse associée à la base de données correspondante.

3. Installation de mise à disposition d'informations selon la revendication 1 ou 2, **caractérisée en ce que** les moyens d'accès (26, 32, 38) sont adaptés pour l'accès à la base de données (12₀, ..., 12ₙ₋₁, 12ₙ₊₁, ..., 12ₙ₊ₚ) à travers un réseau (14, 16) de transmission d'informations.

4. Installation de mise à disposition d'informations selon la revendication 3, **caractérisée en ce que** le réseau (14, 16) de transmission d'informations comporte au moins l'un des éléments parmi un réseau de type Intranet, un réseau de type Extranet, un réseau de type Internet, un réseau de téléphonie commuté et un réseau de télécommunication sans fil.

5. Installation de mise à disposition d'informations selon l'une quelconque des revendications 1 à 4, **caractérisée en ce que** les moyens d'accès à la base de données comportent un dispositif de télécommunication sans fil (38) et **en ce que** les moyens de lecture (22) comportent une interface (36) d'échange d'informations avec le dispositif de télécommunication sans fil (38).

6. Installation de mise à disposition d'informations selon la revendications 5, **caractérisée en ce que** les moyens de lecture (22) sont intégrés dans le dispositif de télécommunications sans fil (38).

7. Installation de mise à disposition d'informations selon la revendication 5 ou 6, **caractérisée en ce que** le dispositif de télécommunication sans fil (38) comporte des moyens de transmission automatique de données de localisation de l'objet (4) vers la base de données (12₀, ..., 12ₙ₊ₚ).

8. Installation de mise à disposition d'informations selon l'une des revendications 1 à 7, **caractérisée en ce qu'**elle comporte des moyens (8) de repérage automatique des informations de localisation (10₀, ..., 10ₙ) dans les moyens de stockage (6) par les moyens de lecture (18, 20, 22).

9. Installation de mise à disposition d'informations selon l'une des revendications 1 à 8, **caractérisée en ce que** les moyens de stockage (6) comportent des moyens de limitation de l'accès par les moyens de lecture. (18, 20, 22) aux informations de localisation (10₀, ..., 10ₙ) de la base de données.

10. Installation de mise à disposition d'informations selon l'une des revendications 1 à 9, **caractérisée en ce que** les moyens de lecture (18, 20, 22) comportent des moyens (25, 29, 35) de mise à jour automatique des informations de localisation (10₀, ..., 10ₙ) stockées dans les moyens de stockage (6), en cas de changement de l'adresse associée à la base de données.

11. Installation de mise à disposition d'informations selon l'une des revendications 1 à 10, **caractérisée en ce qu'**elle comporte en outre au moins une base de données intermédiaire (12ₙ) contenant des informations de localisation (10ₙ₊₁, ..., 10ₙ₊ₚ) d'une multiplicité de bases de données (12ₙ₊₁, ..., 12ₙ₊ₚ) contenant chacune des informations complémentaires relatives audit objet (4), **en ce que** la base de données intermédiaire (12ₙ) est associée à une adresse, et **en ce qu'**au moins une partie des informations de localisation (10ₙ) stockées dans l'étiquette électronique (2) comporte l'adresse de la base de données intermédiaire (12ₙ).

## Claims

1. Installation providing information concerning an object (4), the installation comprising an electronic label (2) fixed on this object (4) and this electronic label including means of storage of information (6), the installation also comprising means of reading (18, 20, 22) of at least part of the information stored in the electronic label (2) and means of access (26, 32, 38) to at least one database (12₀, ..., 12ₙ₋₁, 12ₙ₊₁, ..., 12ₙ₊ₚ) containing complementary information concerning this object said database (12₀, , ..., 12ₙ₋₁, 12ₙ₊₁, ... , 12ₙ₊ₚ) being associated with an address, and database locating information (10₀, ..., 10ₙ) being stored in the electronic label (2), **characterized in that** data for identifying the object (4) which are associated with the locating information (10₀, ..., 10ₙ), are stored in the electronic label (2), and **in that** the means of access (26, 32, 38) are adapted for access to the database as a function of the locating information (10₀, ..., 10ₙ) and of the identifying data read by means of reading (18, 20, 22).

2. Installation providing information according to Claim 1, **characterized in that** at least part of the locating information (10₀, ..., 10ₙ₋₁) comprises the address associated with the corresponding database.

3. Installation providing information according to Claim 1 or 2, **characterized in that** the means of access (26, 32, 38) are adapted for access to the database (12₀, ..., 12ₙ₋₁, 12ₙ₊₁, ..., 12ₙ₊ₚ) through an information transmission network (14, 16).

4. Installation providing information according to Claim 3, **characterized in that** the information transmission network (14, 16) comprises at least one of the elements from among a network of Intranet type, a network of Extranet type, a network of Internet type, a switched telephone network and a wireless telecommunication network.

5. Installation providing information according to any one of Claims 1 to 4, **characterized in that** the means of access to the database comprise a wireless telecommunication device (38) and **in that** the means of reading (22) comprise an interface (36) for exchanging information with the wireless telecommunication device (38).

6. Installation providing information according to Claim 5, **characterized in that** the means of reading (22) are integrated into the wireless telecommunication device (38).

7. Installation providing information according to Claim 5 or 6, **characterized in that** the wireless telecommunication device (38) comprises means of automatic transmission of data for locating the object (4) to the database (12₀, ..., 12ₙ₊ₚ).

8. Installation providing information according to one of Claims 1 to 7, **characterized in that** it comprises means (8) of automatic tagging of the locating information (10₀, ..., 10ₙ) in the means of storage (6) by the means of reading (18, 20, 22).

9. Installation providing information according to one of Claims 1 to 8, **characterized in that** the means of storage (6) comprise means of limitation of access by the means of reading (18, 20, 22) to the locating information (10₀, ..., 10ₙ) of the database.

10. Installation providing information according to one of Claims 1 to 9, **characterized in that** the means of reading (18, 20, 22) comprise means (25, 29, 35) of automatic updating of the locating information (10₀, ..., 10ₙ) stored in the means of storage (6), in case of change of the address associated with the database.

11. Installation providing information according to one of Claims 1 to 10, **characterized in that** it furthermore comprises at least one intermediate database (12ₙ) containing locating information (10ₙ₊₁, ..., 10ₙ₊ₚ) of a multiplicity of databases (12ₙ₊₁, ..., 12ₙ₊ₚ) each containing complementary information concerning said object (4), **in that** the intermediate database (12ₙ) is associated with an address, and **in that** at least part of the locating information (10ₙ) stored in the electronic label (2) comprises the address of the intermediate database (12ₙ).

## Patentansprüche

1. Anlage zum Bereitstellen von Daten zu einem Objekt (4), wobei die Anlage ein elektronisches Etikett (2) umfasst, das auf dem Objekt (4) befestigt ist, wobei dieses elektronische Etikett Datenspeichermittel (6) umfasst, wobei die Anlage auch Mittel zum Lesen (18, 20, 22) mindestens eines Teils der im elektronischen Etikett (2) gespeicherten Daten und Mittel zum Zugang (26, 32, 38) zu mindestens einer Datenbank (12₀, ... 12ₙ₋₁, 12ₙ₊₁, ..., 12ₙ₊ₚ) umfasst, die ergänzende Daten zu diesem Objekt enthält, wobei die Datenbank (12₀, ... 12ₙ₋₁, 12ₙ₊₁, ..., 12ₙ₊ₚ) mit einer Adresse verbunden ist und Lokalisationsdaten (10₀, ..., 10ₙ) der Datenbank im elektronischen Etikett (2) gespeichert sind, **dadurch gekennzeichnet, dass** die Identifikationsdaten des Objekts (4), die mit den Lokalisationsdaten (10₀, ..., 10ₙ) verbunden sind, im elektronischen Etikett (2) gespeichert sind, und dadurch, dass die Mittel für den Zugang (26, 32, 38) in Abhängigkeit von den Lokalisationsdaten (10₀, ..., 10ₙ) und den Identifikationsdaten, die von den Lesemitteln (18, 20, 22) gelesen werden für den Zugang zur Datenbank angepasst sind.

2. Anlage zum Bereitstellen von Daten nach Anspruch 1, **dadurch gekennzeichnet, dass** mindestens ein Teil der Lokalisationsdaten (10₀, ..., 10ₙ₋₁) die mit der entsprechenden Datenbank verbundene Adresse umfasst.

3. Anlage zum Bereitstellen von Daten nach Anspruch 1 oder 2, **dadurch gekennzeichnet, dass** die Mittel für den Zugang (26, 32, 38) für den Zugang zur Datenbank (12₀, ... 12ₙ₋₁, 12ₙ₊₁, ..., 12ₙ₊ₚ) über ein Netz (14, 16) zur Datenübertragung angepasst sind.

4. Anlage zum Bereitstellen von Daten nach Anspruch 3, **dadurch gekennzeichnet, dass** das Netz (14, 16) zur Datenübertragung mindestens eines der Elemente innerhalb eines Netzes des Typs Intranet, eines Netzes des Typs Extranet, eines Netzes des Typs Internet, eines vermittelten Telefonienetzes und eines drahtlosen Telekommunikationsnetzes umfasst.

5. Anlage zum Bereitstellen von Daten nach einem der Ansprüche 1 bis 4, **dadurch gekennzeichnet, dass** die Mittel für den Zugang zur Datenbank eine drahtlose Telekommunikationsvorrichtung (38) umfassen und dadurch, dass die Lesemittel (22) eine Schnittstelle (36) zum Datenaustausch mit der drahtlosen Telekommunikationsvorrichtung (38) umfassen.

6. Anlage zum Bereitstellen von Daten nach Anspruch 5, **dadurch gekennzeichnet, dass** diese Lesemittel (22) in die drahtlose Telekommunikationsanlage (38) integriert sind.

7. Anlage zum Bereitstellen von Daten nach Anspruch 5 oder 6, **dadurch gekennzeichnet, dass** die drahtlose Telekommunikationsvorrichtung (38) Mittel zur automatischen Übertragung von Lokalisationsdaten des Objekts (4) zur Datenbank (12₀, ..., 12ₙ₊ₚ) umfasst.

8. Anlage zum Bereitstellen von Daten nach einem der Ansprüche 1 bis 7, **dadurch gekennzeichnet, dass** sie Mittel (8) zum automatischen Orten der Lokalisationsdaten (10₀, ..., 10ₙ) über die Lesemittel (18, 20, 22) in den Speichermitteln (6) umfasst.

9. Anlage zum Bereitstellen von Daten nach einem der Ansprüche 1 bis 8, **dadurch gekennzeichnet, dass** die Speichermittel (6) Mittel zum Einschränken des Zugangs über die Lesemittel (18, 20, 22) auf die Lokalisationsdaten (10₀, ..., 10ₙ) der Datenbank umfassen.

10. Anlage zum Bereitstellen von Daten nach einem der Ansprüche 1 bis 9, **dadurch gekennzeichnet, dass** die Lesemittel (18, 20, 22) Mittel (25, 29, 35) zum automatischen Aktualisieren der Lokalisationsdaten (10₀, ..., 10ₙ), die in den Speichermitteln (6) gespeichert sind, für den Fall des Wechselns der Adresse in Verbindung mit der Datenbank umfassen.

11. Anlage zum Bereitstellen von Daten nach einem der Ansprüche 1 bis 10, **dadurch gekennzeichnet, dass** sie ferner mindestens eine Zwischendatenbank (12ₙ) umfasst, die Lokalisationsdaten (10ₙ₊₁, ..., 10ₙ₊ₚ) einer Vielzahl von Datenbanken (12ₙ₊₁, ..., 12ₙ₊ₚ) enthält, die alle ergänzende Daten zum Objekt (4) enthalten, dass die Zwischendatenbank (12ₙ) mit einer Adresse verbunden ist, und dass mindestens ein Teil der Lokalisationsdaten (10ₙ), die im elektronischen Etikett (2) gespeichert sind, die Adresse der Zwischendatenbank (12ₙ) enthält.
